Europäisches Patentamt

**European Patent Office**

**Office européen des brevets**

(11) Veröffentlichungsnummer: **0 297 666**

**A2**

(12) **EUROPÄISCHE PATENTANMELDUNG**

(21) Anmeldenummer: 88201320.4

(22) Anmeldetag: 27.06.88

(51) Int. Cl.⁴: **G02B 6/38**

(30) Priorität: **01.07.87 DE 3721650**

(43) Veröffentlichungstag der Anmeldung:
**04.01.89 Patentblatt 89/01**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Hübner, Horst Dr.rer.nat.**
**Dompeweg 11**
**D-5223 Nümbrecht(DE)**
Erfinder: **Grzesik, Ulrich, Dr.rer.nat.**
**August-Kierspel-Strasse 161**
**D-5060 Bergisch-Gladbach(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **In eine Steckerhülse einsteckbarer Steckerstift für einen Lichtwellenleiter.**

(57) Die Erfindung bezieht sich auf einen in eine Steckerhülse einsteckbaren Steckerstift für einen Lichtwellenleiter (LWL), mit einem den LWL in einer zentralen Bohrung aufnehmenden Kernröhrchen, welches von einer Mantelhülse umgeben ist, dessen Werkstoff weicher als derjenige des Kernröhrchens ist und einen größeren thermischen Ausdehnungskoeffinzienten aufweist.

Eine in einem großen Temperaturbereich dämpfungsarme Steckverbindung ergibt sich dadurch, daß die Wandstärken der Mantelhülse (3) und des Kernröhrchens (2) derart bemessen sind, daß der resultierende thermische Ausdehnungskoeffizient des Steckerstifts im wesentlichem dem Wert des Werkstoffes der Steckerhülse (4) entspricht.

## In eine Steckerhülse einsteckbarer Steckerstift für einen Lichtwellenleiter

Die Erfindung bezieht sich auf einen in eine Steckerhülse einsteckbaren Steckerstift für einen Lichtwellenleiter (LWL), mit einem den LWL in einer zentralen Bohrung aufnehmenden Kernröhrchen, welches von einer Metallhülse umgeben ist, dessen Werkstoff weicher als derjenige des Kernröhrchens ist und einen größeren thermischen Ausdehnungskoeffizienten aufweist.

Bei einer in PKI-Tech.Mitt. 1987, SO. 1, Seite 86 beschriebenen Anordnung dieser Art werden die als Glaskapillaren ausgebildeten Kernröhrchen relativ dünn ausgeführt, während die aus einem Weichmetall bestehenden und gut bearbeitbaren Metallhülsen sehr dick sind. Falls die Steckerstifte in zugeordnete beispielsweise aus Hartmetall bestehende Steckerhülsen eingesteckt werden sollen und eine Leichtgängigkeit auch in einem großen Temperaturbereich erforderlich ist, müssen relativ große Spalte zwischen Steckerstift und Steckerhülse vorgesehen sein, damit bei vorkommenden höchsten Temperaturen keine Klemmung des sich stärker ausdehnenden Steckerstifts in der Steckerhülse auftritt. Dann ergeben sich aber bei niedrigen Temperaturen zu große Spalte, welche eine Fehlausrichtung des LWL des Steckerstifts zum LWL der Steckerhülse zur Folge haben.

Der Erfindung liegt die Aufgabe zugrunde, den Steckerstift der eingangs genannten Art derart zu gestalten, daß er in einem großen Temperaturbereich eine dämpfungsarme Steckverbindung ermöglicht.

Die Lösung gelingt dadurch, daß die Wandstärken der Mantelhülse und des Kernröhrchens derart bemessen sind, daß der resultierende thermische Ausdehnungskoeffizient des Steckerstifts im wesentlichem dem Wert des Werkstoffes der Steckerhülse entspricht.

Die Mantelhülse braucht nur in einer solch geringen Wandstärke aufgebracht werden, daß bei der Zentrierbearbeitung ein erforderlicher Materialabtrag, beispielsweise durch Abdrehen, möglich ist. Statt des hohen thermischen Ausdehnungskoeffizienten des weichen Werkstoffes der Mantelhülse bestimmt der niedrige Ausdehnungskoeffizient des Werkstoffes des Kernröhrchens die Ausdehnung des Steckerstifts.

Durch Anpassung der Werkstoffe und der relativen Dicken des Kernröhrchens und der Mantelhülse läßt sich erreichen, daß der Spalt zwischen Steckerstift und Steckerhülse nahezu temperaturunabhängig ist.

Für die Mantelhülse kann vorteilhaft ein Werkstoff gewählt werden, welcher gut spanabhebend bearbeitbar ist. Er muß dagegen nicht einschränkend im Hinblick auf einen der Steckerhülse angepaßten thermischen Ausdehnungskoeffizienten ausgewählt werden.

Ein bevorzugtes Verfahren zur Herstellung eines erfindungsgemäßen Steckerstiftes ist dadurch gekennzeichnet, daß die Mantelhülse mit einem Innendurchmesser hergestellt wird, welcher kleiner als der Außendurchmesser des Kernröhrchens ist und im erwärmten Zustand über das Kernröhrchen geschoben wird. Dann bleibt im Temperaturbereich von z.B.- 20° bis + 60° stets ein fester elastischer Zusammenhalt zwischen Kernröhrchen und Mantelhülse erhalten.

Andererseits sind auch Kleber verfügbar, die einen solchen Zusammenhalt auch ohne thermische Schrumpfung garantieren.

Gemäß einer alternativen Verfahrensweise ist vorgesehen, daß die Mantelhülse als eine Schicht aus Lötmaterial auf das Kernröhrchen in geschmolzenem Zustand aufgebracht wird. Dafür sind Silberlote besonders geeignet.

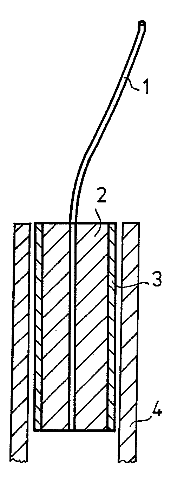

Die Erfindung wird anhand eines in der Zeichnung dargestellten Ausführungsbeispiels der Erfindung näher erläutert.

Die Figur zeigt im Längsschnitt einen erfindungsgemäßen Steckerstift.

Der in der Figur dargestellte, das Ende eines LWL aufnehmende Steckerstift besteht aus einem Kernröhrchen 2 und einer dünnen Mantelhülse 3.

In die zentrale Bohrung des beispielsweise aus keramischen Material ($\alpha = 4 \cdot 10^{-6}$) bestehenden Kernröhrchens, dessen Außendurchmesser 2,229 mm beträgt, wurde der LWL 1 eingeklebt. Eine Mantelhülse aus einem gut bearbeitbaren Weichmetall ($\alpha = 16 \cdot 10^{-6}$) welches unter dem Handelsnamen Arcap (Legierung aus im wesentlichen Nickel, Kupfer und Zink) erhältlich ist, wurde mit einem Innendurchmesser von 2,223 mm hergestellt und nach Erwärmung auf 300° über das Kernröhrchen geschoben. Danach wurde der Außenumfang der Mantelhülse 3 des in eine optische Drehbank eingespannten Steckerstiftes zur optischen Achse des LWL 1 zentriert spanabhebend bearbeitet. Der somit erhaltene Steckerstift erwies sich als besonders gut geeignet für eine korrespondierende Hartmetall-Steckerhülse (4), deren Innendurchmesser 2,50 mm beträgt und deren Werkstoff einen thermischen Ausdehnungskoeffizienten von $\alpha = 5,3 \cdot 10^{-6}$ aufweist.

### Ansprüche

1. In eine Steckerhülse einsteckbarer Steckerstift für einen Lichtwellenleiter (LWL), mit einem den LWL in einer zentralen Bohrung aufnehmenden Kernröhrchen, welches von einer Mantelhülse umgeben ist, dessen Werkstoff weicher als derjenige des Kernröhrchens ist und einen größeren thermischen Ausdehnungskoeffzienten aufweist,
dadurch gekennzeichnet, daß die Wandstärken der Mantelhülse (3) und des Kernröhrchens (2) derart bemessen sind, daß der resultierende thermische Ausdehnungskoeffizient des Steckerstifts im wesentlichem dem Wert des Werkstoffes der Steckerhülse (4) entspricht.

2. Anordnung nach Anspruch 1,
dadurch gekennzeichnet, daß die Wandstärke der Mantelhülse (3) kleiner als die des Kernröhrchens (2) ist.

3. Anordnung nach Anspruch 1 oder 2,
dadurch gekennzeichnet, daß der thermische Ausdehnungskoeffizient des Werkstoffs des Kernröhrchens (2) kleiner als derjenige des Werkstoffs der Steckerhülse (4) ist.

4. Steckerstift nach einem der Ansprüche 1 bis 3,
dadurch gekennzeichnet, daß der Werkstoff der Mantelhülse (3) gut spanabhebend bearbeitbar ist.

5. Verfahren zur Herstellung eines Steckerstiftes nach einem der Ansprüche 1 bis 5,
dadurch gekennzeichnet, daß die Mantelhülse (3) mit einem Innendurchmesser hergestellt wird, welcher kleiner als der Außendurchmesser des Kernröhrchens 2 ist und im erwärmten Zustand über das Kernröhrchen geschoben wird.

6. Verfahren nach Anspruch 5,
dadurch gekennzeichnet, daß eine weichmetallische eisenfreie Mantelhülse (3) deren Innendurchmesser mindestens 0,003 mm kleiner als der Außendurchmesser des aus Keramik bestehenden Kernröhrchens (2) ist, bei einer Übertemperatur von 250° bis 350° über das Kernröhrchen (2) geschoben wird.

7. Verfahren nach Anspruch 5,
dadurch gekennzeichnet, daß die Mantelhülse auf das Kernröhrchen geklebt wird.

8. Verfahren nach Anspruch 5,
dadurch gekennzeichnet, daß die Mantelhülse als eine Schicht aus Lötmaterial auf das Kernröhrchen im geschmolzenem Zustand aufgebracht wird.